# EUROPEAN PATENT APPLICATION

(11) **EP 2 532 591 A2**
(43) Date of publication of application: **12.12.2012**
(21) Application number: 12169142.2
(22) Date of filing: 23.05.2012
(51) Int. Cl.: B64D 47/04

(54) **Aircraft led leanding or taxi lights with thermal management**

(30) Priority: 10.06.2011 US 201113157578
(71) Applicant: Honeywell International Inc., Morristown, NJ 07962-2245 (US)
(72) Inventor: Barnett, David, Morristown, NJ New Jersey 07962-2245 (US); Singer, Jeffrey M., Morristown, NJ New Jersey 07962-2245 (US); Martin, Timothy C., Morristown, NJ New Jersey 07962-2245 (US)
(74) Representative: Houghton, Mark Phillip

(57) **Abstract**

Low weight, low cost, low complexity systems and methods for performing large thermal transfer during worst-case conditions to ensure a light-emitting diode (LED) light. An exemplary device includes a housing (24) with a sealed cavity, a circuit board (26) having a first side attached to one side of the housing, a plurality of light sources (32) attached to a second side of the circuit board and a material (40) located within the sealed cavity. The material changes phase at a predefined temperature. The housing includes a plurality of protrusions (44) that extend into the cavity. The housing and the protrusions transfer heat generated by the light sources into the material. The plurality of light sources include light-emitting diodes (LEDs). A plurality of optical elements (28) direct light generated by the LEDs. The optical elements are attached to the circuit board.

## Description

### BACKGROUND OF THE INVENTION

Aircraft landing and taxi lights are high-output devices used for short periods of time on the ground and for a limited amount of time in flight. Traditional halogen or incandescent lamps are largely temperature-insensitive and short-lived devices. High maintenance costs in changing failed traditional landing lights every 20 to 100 hours of operation have led to interest in high-intensity discharge (HID) and light-emitting diode (LED) lighting. While HID lighting has improved length of life when compared to traditional sealed-beam lighting, there are several limitations when used on aircraft and HID lighting is thought to be an intermediate technology bridging traditional and rapidly improving LED lighting.

The major difference between LED devices and traditional or HID lighting is the need to control the maximum temperature of the solid-state device that produces the light. A major advantage of LED lighting is the wide range of output that a single light can produce. While traditional and HID lighting can be operated at reduced power, there are limits to the magnitude of the reduction and potentially negative impacts to color and/or life. An LED light is capable of multiple modes of operation. In high-power mode the light can produce landing light intensities and then be reduced to 10 to 15% of full power and used for a taxi light function. This allows reduction in an aircraft's carried weight, reduction in power, and reduced drag on exposed installations. A design problem is managing the thermal load for high power applications. The high power mode dictates the size of the thermal management solution. Taxi lights can be used for long periods of time and, as the name implies, on the ground with higher ambient temperatures and low airspeed. A thermal management system sized for typical landing light duration could be inadequate if preloaded by longer term taxi light operation.

### SUMMARY OF THE INVENTION

The present invention provides low weight, low cost, low complexity systems and methods for performing large thermal transfer during worst-case conditions to ensure a light-emitting diode (LED) light, thus avoiding overheating.

An exemplary device includes a housing with a sealed cavity, a circuit board having a first side attached to one side of the housing, a plurality of light sources attached to a second side of the circuit board and a material located within the sealed cavity. The material changes phase at a predefined temperature.

In one aspect of the invention, the housing includes a plurality of protrusions that extend into the cavity. The housing and the protrusions transfer heat generated by the light sources into the material.

In another aspect of the invention, the plurality of light sources includes light-emitting diodes (LEDs). A plurality of reflectors direct light generated by the LEDs. The reflectors are attached to the circuit board and are formed from a monolithic material.

### BRIEF DESCRIPTION OF THE DRAWINGS

Preferred and alternative embodiments of the present invention are described in detail below, with reference to the following drawings:

FIGURE 1 illustrates a perspective view of a light formed in accordance with an embodiment of the present invention;

FIGURE 2 illustrates a perspective, cross-sectional view of the light of FIGURE 1; and

FIGURE 3 illustrates an exploded view of a light formed in accordance with an embodiment of the present invention.

### DETAILED DESCRIPTION OF THE INVENTION

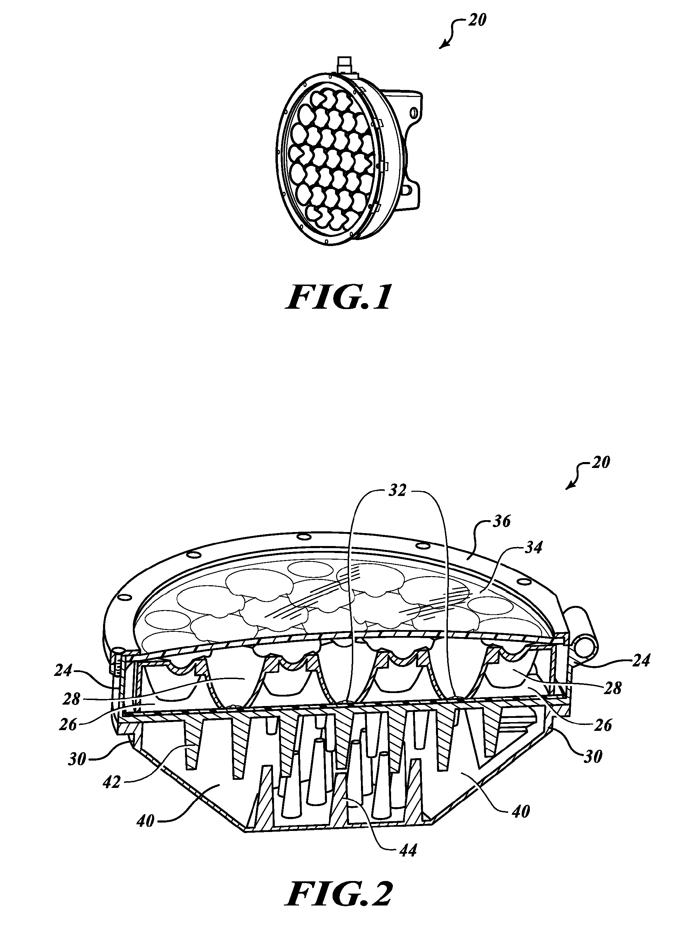

FIGURES 1-3 illustrate an exemplary light 20 formed in accordance with an embodiment of the present invention. In this example, the light 20 is a PAR-64 aircraft landing light. The present invention may be implemented into other sized landing lights.

The light 20 includes a front housing 24 and a rear housing 30 that attaches to the front housing 24. Mounted to an interior base of the front housing 24 is a printed circuit board (PCB) 26 that includes a plurality of light-emitting diodes (LEDs) 32. Also mounted to the PCB 26 is a plurality of reflectors 28. In one embodiment, the reflectors 28 are formed from a monolithic material. A lens 34 is attached to the front housing 24 using a lens retainer 36 that is fastened to a flange at an exterior rim of the front housing 24.

In one embodiment, the reflectors 28 are injection molded plastic that is metalized in a secondary operation followed by a protective top coat. Application specific mounting features are molded into the reflectors 28. For example, recessed pockets are located about the perimeter for receiving small threaded fasteners that pass through PCB 26 thereby retaining the reflectors 28 and the PCB to the housing 24. In addition there may be stand-offs in a small bolt-circle that support the reflector and circuit card in the center to address plate mode responses. There is no optical requirement to limit the redistribution of the LED light by use of reflectors in fact there are examples of LED flood lights with Total Internally Reflecting (TIR) optics used. When TIR optics are used the individual optics (one per LED) are often mounted in a larger carrier, the carrier with optics would then be installed in a similar manner as a monolithic reflector.

When the rear housing 30 is attached to the front housing 24, a cavity is formed between the rear housing 30 and the front housing 24. The cavity that is formed is occupied by a phase-change material (PCM) 40. A seal is formed between the front and rear housings 24, 30 to ensure containment of the PCM 40.

In one embodiment, a plurality of protrusions 42 extend from a backside of the front housing 24 into the formed cavity. Also, the rear housing 30 includes a plurality of protrusions 44 that also extend into the formed cavity. The protrusions 42, 44 conduct heat from the LEDs 32 and PCB 26 into the PCM 40. In this embodiment, the protrusions 42, 44 are conical shaped, but may be other shapes.

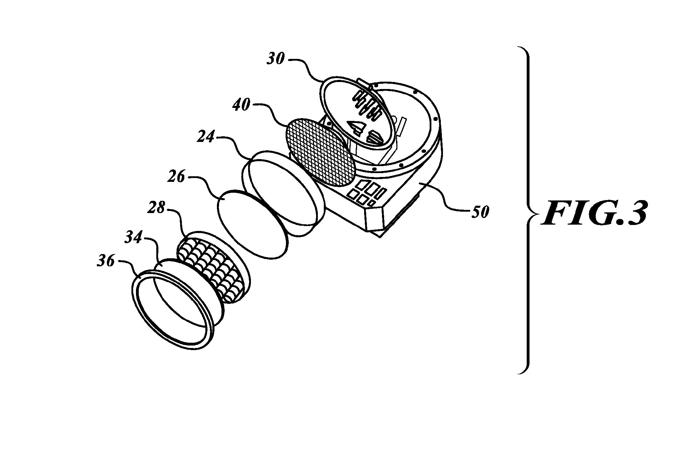

In one embodiment, as shown in FIGURE 3, the light 20 is rotatably received within a light-motor housing structure 50. The light-motor housing structure 50 allows the light to be rotated about a mounting point, such as a mounting point 54 (FIGURE 2) located on the front or rear housings 24, 30.

Based on environmental heat dissipation at the location where the light is placed in the vehicle, the size of the light and the volume of space containing the PCM can be reduced to a size that allows for a tolerable rise in LED temperature during typical operation. When the light is used for unusually long periods (i.e., greater than a threshold amount of time) in ground operation or an extreme flight condition, excess heat is stored in the PCM, limiting the LEDs' temperature's rise to below the maximum rated temperature of the LEDs.

In one embodiment, the PCB 26 includes circuitry for driving (i.e., supplying power) the LEDs 32. In one embodiment, the LED drive circuitry includes a temperature sensor. The temperature sensor provides a signal level (temperature values) to a processor/controller located on the PCB 26 or remotely located from the light. The temperature values are analyzed by the processor/controller. The LED drive circuitry (the processor/controller) reduces the light power to preserve the LEDs in extreme conditions (i.e., the sensed temperature values go above a threshold amount) after the PCM has been fully converted into the higher energy state (typically from solid to liquid, but any phase change applies). The temperature sensor can provide an analog or a digital signal. Based on the analog or digital signal, the processor/controller causes the LED drive current to be reduced progressively as the temperature increases. In one embodiment, the processor/controller uses a time constant if the power fold-back starts at the PCM melt temperature to reduce thermal inertia of the system when the full mass of the PCM has changed phase. The phase change temperature is a design factor by material selection, and the threshold time (time constant) is dependent on the thermal storage volume.

The mass of the PCM can be varied, based on a predefined amount of waste heat produced by the LED, the dissipation rate of the locations where the light is mounted, and the desired minimum operation time at a given temperature and air flow.

In one embodiment, aircraft are fitted with multiple light installations for fault protection. In one example, each instance of a multiple-light installation could use the same basic light engine (drive circuitry) and vary the type or amount of phase-change material to compensate for the local mounting structure and thermal dissipation rate desired.

The PCM can discharge the waste heat during non-operating periods. In particular, during flight with high-speed airflow across the vehicle and low ambient temperatures, the discharge rate should be quite rapid. Heat storage during landing and taxiing should normally be less because high-speed airflow exists for all but the last few seconds of operation. A cooled aircraft from the flight phase provides a structural buffering effect, as well. In the taxi light mode, the light is used at a greatly reduced power level. Thus, in this mode, the energy storage requirements for in-bound landing light usage and operating time in taxiing mode for the aircraft to travel to the gate are likely to be less than for a typical out-bound thermal loading sequence.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

The embodiments of the invention in which an exclusive property or privilege is claimed are defined as follows:

## Claims

1. A lighting apparatus (20) comprising:
a housing (24) comprising a sealed cavity;
a circuit board (26) having a first side attached to one side of the housing;
a plurality of light sources (32) attached to a second side of the circuit board; and
a material (40) located within the sealed cavity, the material configured to change phase at a predefined temperature.

2. The apparatus of Claim 1, wherein the housing comprises a plurality of protrusions (44) that extend into the cavity, the housing and the protrusions being configured to transfer heat generated by the light sources into the material.

3. The apparatus of Claim 2, wherein the plurality of light sources comprise light-emitting diodes (LEDs).

4. The apparatus of Claim 3, further comprising a plurality of optical elements (28) configured to redirect light generated by the LEDs.

5. The apparatus of Claim 4, further comprising a lens (34) attached to the housing adjacent the plurality of optical elements.

6. The apparatus of Claim 1, further comprising:
a temperature sensor configured to sense temperature in proximity to the light sources; and
a controller in signal communication with the temperature sensor, the controller being configured to supply power to the light sources based on the sensed temperature.

7. A method comprising:
driving a plurality of light sources; and
absorbing thermal energy produced by the plurality of light sources into a material configured to change phase at a predefined temperature.

8. The method of Claim 7, wherein the plurality of light sources comprise light-emitting diodes (LEDs) (32).

9. The method of Claim 8, further comprising redistributing light produced by the LEDs.

10. The method of Claim 7, further comprising:
sensing temperature in proximity to the plurality of light sources; and
supplying power to the plurality of light sources based on the sensed temperature.
